# FASCICULE DE BREVET EUROPEEN

(11) **EP 3 891 024 B1**
(45) Date de publication et mention de la délivrance du brevet: **28.12.2022**
(21) Numéro de dépôt: 19835462.3
(22) Date de dépôt: 29.11.2019
(51) Int. Cl.: B60R 21/207, B60N 2/427, B60R 7/04, B60N 2/42, B60R 16/023, B60R 16/02

(54) **VEHICULE COMPRENANT UN BOITIER ELECTRONIQUE IMPLANTE SOUS LE COUSSIN D'ASSISE D'UN SIEGE**
FAHRZEUG MIT EINEM UNTER DEM SITZKISSEN EINES SITZES UNTERGEBRACHTEN ELEKTRONISCHEN GEHÄUSE
VEHICLE COMPRISING AN ELECTRONIC HOUSING IMPLANTED UNDER THE SEAT CUSHION OF A SEAT

(30) Priorité: 03.12.2018 FR 1872225
(43) Date de publication de la demande: 13.10.2021
(73) Titulaire: PSA Automobiles SA, 78300 Poissy (FR)
(72) Inventeur: CONVERS, Germain, 70290 CHAMPAGNEY (FR)
(86) Numéro de dépôt international: PCT/FR2019/052859
(87) Numéro de publication internationale: WO 2020/115407

(56) Documents cités:
- EP-A1- 1 234 712
- EP-A1- 1 291 237
- DE-A1- 10 246 090
- FR-A1- 2 824 798
- FR-A1- 2 868 997
- FR-A1- 2 884 780
- FR-A1- 2 969 058
- JP-A- 2010 120 395

## Description

L'invention se situe dans le domaine des véhicules et, plus particulièrement, des véhicules automobiles. L'invention a trait à un véhicule présentant un boîtier électronique agencé sous le coussin d'assise d'un siège.

La montée en gamme des véhicules automobiles impose aux constructeurs de trouver des solutions industrialisables pour proposer en grande série des véhicules dotés d'équipements dont le taux de monte était précédemment limité. Ainsi, avec l'arrivée massive des aides à la conduite et de l'électrification qui s'ensuit, la nécessité d'implantation de boîtiers électroniques devient de plus en plus importante.

L'implantation de boîtiers électroniques a déjà été envisagée au niveau du coffre de la voiture, au détriment de la place disponible, ce qui représente un inconvénient du point de vue de l'utilisateur.

Le document japonais JP2010120395 décrit un boîtier électronique intégré dans le dossier d'un siège arrière de véhicule. Cette technologie est intéressante, mais implique une fixation du boîtier dans la mousse du dossier. De plus, le contact du boîtier sur la tôle risque de générer des nuisances sonores. Enfin, ce document décrit un cheminement du faisceau électrique dans les dossiers des sièges ce qui n'est pas forcément souhaitable.

Le brevet français FR2884780 décrit un agencement pour le support dans un véhicule automobile d'un boîtier électronique qui est disposé sous l'assise d'un siège du véhicule. Le boîtier électronique est monté coulissant sur un support qui est fixé à un élément du siège et est reçu à la manière d'un tiroir à travers un orifice d'introduction pratiqué dans une face de caisson de réception du support. L'agencement décrit dans ce document est intéressant mais en étant agencé sur un support coulissant sous le siège, le boîtier n'est pas complètement caché ce qui n'est pas acceptable dans un modèle haut de gamme de voiture.

Les documents EP1234712 et EP1291237 décrivent des véhicules comportant sous le siège un système anti sous-marinage et un boîtier électronique. Le document EP1234712 décrit un véhicule automobile selon le préambule de la revendication 1 et un procédé de montage d'au moins un boîtier électronique dans un véhicule automobile selon le préambule de la revendication 6.

L'invention a pour objectif d'apporter une réponse à au moins un des problèmes et inconvénients rencontrés dans l'art antérieur en proposant un nouvel agencement pour l'implantation d'un boîtier électronique dans un véhicule automobile. En particulier, l'invention a pour objectif de proposer un agencement permettant de soustraire ledit boîtier et son lieu d'implantation à la vue des utilisateurs du véhicule. L'invention a également pour objectif de proposer un agencement qui soit déclinable sur tous les types de véhicules de manière indépendante de leur style. Enfin, l'invention a pour objectif de proposer un nouvel agencement qui n'empiète pas sur le volume utile du coffre ou de l'habitacle du véhicule.

A cet effet, et selon un premier aspect, l'invention a pour objet un véhicule avec les caractéristiques de la revendication 1.

Comme on l'aura compris à la lecture de la définition qui vient d'en être donnée, l'invention propose d'intégrer un boîtier électronique sur le plancher d'un véhicule automobile au sein d'une cavité qui a été réalisée dans un dispositif anti sous-marinage d'un coussin d'assise. Cette nouvelle configuration permet de placer un boîtier électronique dans un véhicule à l'abri de la vue des utilisateurs tout en conservant l'espace intérieur du véhicule. En effet, le boîtier va être placé sous un coussin d'assise, ce qui s'avère être pratique en termes d'espace disponible au sein du véhicule. Ce nouvel agencement peut être décliné sur tout type de véhicule. Ensuite, la fixation du support (et donc du boîtier électronique) se fait par l'intermédiaire des moyens de fixation d'un faisceau de câbles. Cette configuration est avantageuse en ce que la fixation du faisceau de câbles ne fait pas appel à des moyens de fixation supplémentaires. Cette particularité renforce le côté adaptable de l'invention en ce que le boîtier électronique, par l'intermédiaire de son support, peut être fixé sur tous les véhicules comprenant déjà un faisceau de câbles circulant sous le dispositif anti sous-marinage des assises des sièges.

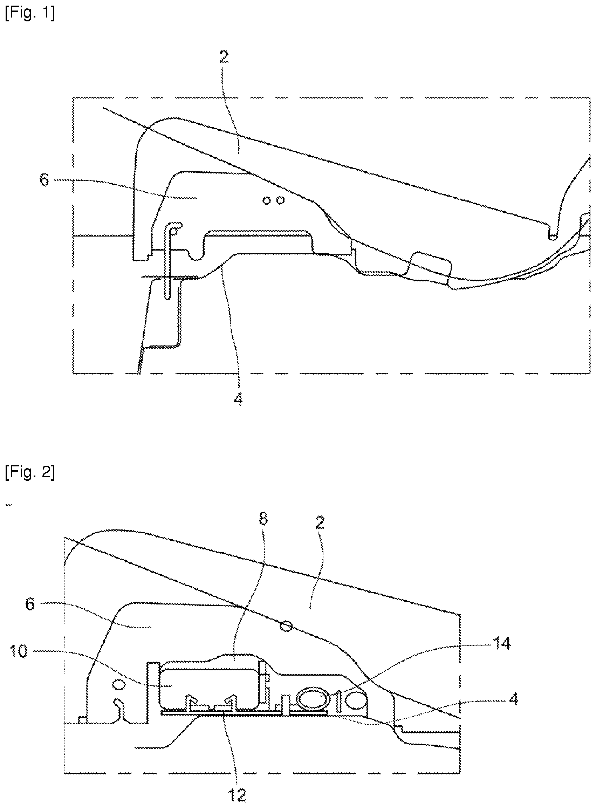

Les sièges équipés de dispositifs sous-marinages sont connus de l'homme du métier. La figure 1 représente une vue en coupe d'un coussin 2 d'assise d'un siège de véhicule automobile selon l'art antérieur. Un dispositif anti sous-marinage 6 est disposé au sein du coussin 2 d'assise et adjacent au plancher 4 du véhicule. Le « sous-marinage » correspond à l'enfoncement du corps d'un passager dans une assise suivi d'un glissement de ce corps vers l'avant du véhicule en cas de choc frontal. L'enfoncement combiné au glissement induit un déplacement relatif de la partie transversale de la ceinture de sécurité du bassin vers le ventre, qui peut occasionner de graves lésions internes. Généralement, le dispositif anti sous-marinage comprend un élément rigide 6, généralement réalisé en polypropylène expansé, et qui présente un bossage s'étendant selon l'axe transversal du véhicule. L'élément rigide va ainsi définir une cuvette de retenue en cas d'enfoncement du corps du passager. L'invention est remarquable en ce qu'elle va creuser une cavité dans cet élément rigide, de manière à ce que la cavité soit ouverte en direction du plancher et en ce qu'elle va utiliser l'espace formé par cette cavité pour l'implantation d'au moins un boîtier électronique.

La configuration selon laquelle le boîtier électronique est fixé au plancher du véhicule par l'intermédiaire d'un support, est avantageuse car une interface de fixation, en plus de supprimer tout déplacement du boîtier électronique dans la cavité, peut également être utilisée pour fixer d'autres éléments du véhicule automobile. Il était connu en effet de faire passer un faisceau de câbles électriques d'alimentation en énergie électrique, par exemple destiné au réservoir de carburant. La fixation du boîtier électronique et d'un ou plusieurs faisceaux de câbles sur la même interface de fixation, c.-à-d. le même support, permet de limiter le nombre d'attaches pour la fixation de ces derniers. Par exemple, il permet de limiter le nombre de goujons de fixation à souder sur le plancher à deux goujons seulement au lieu des quatre qui seraient nécessaires sans l'emploi d'un tel support. Par ailleurs, l'emploi d'un tel support permet aussi une fixation plus compacte du boîtier et du ou des câbles et minimise donc la taille de la cavité nécessaire pour les recevoir. Il est ainsi possible de placer un boîtier électronique sous une assise de siège en plus d'y faire passer au moins un faisceau de câbles sans pour autant détériorer les prestations de la partie rigide du dispositif anti sous-marinage en matière d'absorption de chocs, c'est-à-dire en gardant une partie rigide suffisamment épaisse pour sa fonction. Cette configuration compacte est intéressante car elle permet de conserver un emplacement aussi central que possible pour le faisceau de câbles dans la cavité et donc d'éviter l'écrasement du faisceau de câbles par l'élément rigide du dispositif anti sous-marinage, notamment en cas de chocs.

De préférence, le support formant ladite interface de fixation est indexé en position sur ledit plancher par au moins deux goujons traversant des ajours présentés par ledit support, et les moyens de fixation du faisceau de câbles coopèrent avec lesdits goujons pour la fixation simultanée du faisceau de câbles et du support sur le plancher.

Dans une première alternative préférée, les moyens de fixation du faisceau de câbles comprennent au moins un moyen d'agrafage présentant un élément femelle configuré pour coopérer avec un goujon, et/ou lesdits goujons sont fixés sur le plancher par soudage.

Selon un mode de réalisation préféré de l'invention, le support formant ladite interface de fixation présente des moyens de clippage pour la fixation dudit boîtier électronique. C'est un moyen simple pour insérer et maintenir le boîtier électronique sur le support. Les moyens de clippage permettent également d'enlever le boîtier en cas de besoin. De préférence, le support est réalisé en matière plastique et les moyens de clippage sont venus de matière avec ledit support. Cela permet de réaliser le support avec les moyens de clippage en une seule pièce, rendant ainsi plus solide l'interaction entre les moyens de clippage et ledit support et plus économique la fabrication de l'ensemble.

Selon un autre mode de réalisation préféré du premier aspect de l'invention, au moins un moyen de fixation du ou desdits faisceaux de câbles comprend des moyens de fixation d'un deuxième faisceau de câbles. Cette configuration permet de maintenir d'autres faisceaux pouvant traverser la cavité présentée par l'élément rigide du dispositif anti sous-marinage. De préférence, le deuxième faisceau de câbles est un faisceau de câbles destiné à l'alimentation en énergie électrique dudit boîtier électronique.

Selon une caractéristique de l'invention, le support formant ladite interface de fixation est une platine de fixation et/ou le support présente un détrompeur coopérant avec des moyens complémentaires présentés par le boîtier électronique de manière à garantir le bon positionnement dudit boîtier sur ledit support. Le fait que le support forme un plan permet de ne pas occuper trop d'espace à l'intérieur de la cavité formée dans l'élément rigide du dispositif anti sous-marinage. De préférence, le support est réalisé en un matériau plastique et le détrompeur est un ergot venu de matière avec ledit support.

Selon un second aspect, l'invention a pour objet un procédé de montage d'au moins un boîtier électronique dans un véhicule automobile avec les caractéristiques de la revendication 6.

Comme on l'aura compris, le procédé de montage selon l'invention est avantageux en ce que le boîtier électronique est monté au sein du véhicule à l'abri de la vue des utilisateurs tout en conservant l'espace disponible à l'intérieur du véhicule. La qualité perçue par l'utilisateur est donc améliorée.

L'invention sera bien comprise et d'autres aspects et avantages apparaîtront clairement à la lecture de la description qui suit, donnée en référence aux planches de dessins annexées sur lesquelles :
[Fig.1] La figure 1 représente une vue en coupe d'un coussin d'assise selon l'art antérieur.
[Fig.2] La figure 2 représente une vue en coupe d'un coussin d'assise selon l'invention, montrant un agencement avec un boîtier électronique sous le coussin d'assise.
[Fig.3] La figure 3 représente une vue de la face supérieure du plancher sur laquelle un boîtier électronique est agencé.
[Fig.4] La figure 4 illustre un exemple d'un système de fixation entre un faisceau de fil et un des goujons présentés par le plancher utilisable dans le cadre de l'invention
[Fig.5] La figure 5 illustre un exemple de système de fixation entre un faisceau de fil et un des goujons présentés par le plancher utilisable dans le cadre de l'invention.
[Fig.6] La figure 6 est un logigramme schématisant le procédé de montage selon la présente invention.

Dans la description qui suit le terme « comprendre » est synonyme de « inclure » et n'est pas limitatif en ce qui concerne la présence d'autres éléments dans le véhicule auquel il se rapporte ou la présence d'autres étapes dans le procédé auquel il se rapporte. Il est entendu que le terme « comprendre » inclut les termes « consister en ». Sur les différentes figures, les mêmes références désignent des éléments identiques ou similaires.

La figure 1 ayant déjà été commentée en partie introductive, on se référera à présent à la figure 2 qui représente une vue en coupe d'un coussin 2 d'assise dont le dispositif anti sous-marinage montre un élément rigide 6 (préférentiellement réalisé en polyéthylène expansé ou EPP) avec un bossage s'étendant selon l'axe transversal du véhicule et présentant une cavité 8 ouverte en direction du plancher 4 du véhicule. Un boîtier 10 électronique est disposé au sein de la cavité 8. L'agencement qui en résulte cache donc le boîtier 10 qui se retrouve sous le coussin 2 d'assise. De même, l'espace sous le coussin 2 d'assise est valorisé, vu que l'insertion du boîtier 10 ne restreint pas le volume disponible de l'habitacle ou du coffre du véhicule automobile. Cet agencement rend le lieu d'implantation du boîtier électronique invisible aux yeux de l'utilisateur du véhicule. L'invention est donc compatible avec les exigences de style des véhicules haut de gamme.

La figure 2 montre aussi la présence d'un support 12 formant une interface de fixation entre le plancher 4 et le boîtier 10 électronique. Ce support 12 a pour utilité de pouvoir fixer d'autres éléments du véhicule, tels qu'un ou plusieurs faisceaux 14 de câbles, ou d'employer les moyens de fixation de ces derniers pour la fixation du boîtier électronique. Un exemple de faisceau 14 de câbles circulant sous les assises des sièges passagers de rang 2 est un faisceau de câbles électriques destiné à l'alimentation électrique du réservoir de carburant. De manière avantageuse, le faisceau de câbles est protégé par une gaine ou une enveloppe protectrice.

Le support 12 peut être réalisé en plastique.

Par préférence, le support 12 présente des moyens de clippage pour la fixation du boîtier 10 électronique. Ces moyens de clippage sont avantageusement réversibles et permettent de retenir ou de retirer le boîtier. Pour une plus grande facilité de conception, ces moyens de clippage sont venus de matière avec le support 12.

Afin de maintenir le boîtier 10 électronique en place, le support 12 peut présenter un détrompeur (non représenté) destiné à garantir le bon positionnement du boîtier 10 électronique sur le support 12. Dans ce cas, le boîtier 10 doit présenter des moyens complémentaires de manière à coopérer avec le détrompeur. Le détrompeur est préférentiellement un ergot, plus préférentiellement un ergot venu de matière avec le support 12.

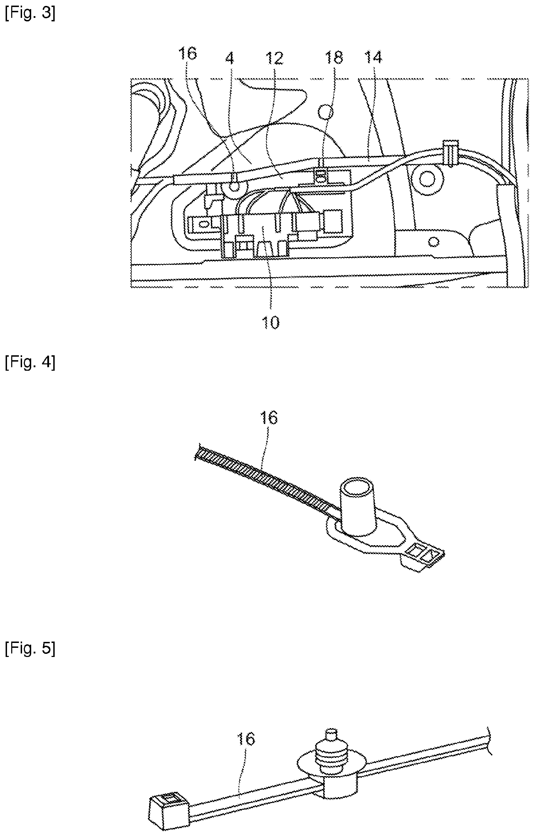

Comme indiqué sur la figure 3, le ou les faisceaux 14 de câbles présentent des moyens de fixation (16 ; 18) au plancher 4. Ces moyens de fixation (16 ; 18) vont attacher le support 12 du boîtier 10 électronique au plancher 4. Comme on peut le voir sur la figure 3, le support 12 est intercalé en partie entre le ou les faisceaux 14 de câbles et le plancher 4.

De façon avantageuse, des goujons (non représentés) traversant des ajours (également non représentés) sur le support 12 permettent d'indexer en une position désirée le support 12 sur le plancher 4. Lorsque les goujons sont présents, ceux-ci vont coopérer avec les moyens de fixation (16 ; 18) du faisceau 14 de câbles. Les goujons sont préférentiellement soudés dans la tôle du plancher 4.

Au moins deux goujons sont utilisés pour l'indexation du support 12 en position sur le plancher 4. Aussi, de préférence, seuls deux goujons seront utilisés pour l'indexation et la fixation à la fois du support et d'au moins un faisceau de câbles.

De manière préférentielle, les moyens de fixation (16 ; 18) du faisceau 14 de câbles sont des lanières en plastique, des colliers de serrage, des colliers de serrage autobloquants ou des moyens d'enrubannage.

De manière préférentielle, ces moyens de fixation (16 ; 18) du faisceau 14 de câbles comprennent au moins un moyen d'agrafage présentant un élément femelle. Un exemple d'un tel moyen de fixation 16 est représenté en figure 4. L'élément femelle peut venir se visser, ou se clipper dans un des goujons présents.

Alternativement, les moyens de fixation (16 ; 18) du faisceau 14 de câbles comprennent au moins un moyen d'agrafage présentant un élément mâle. Une représentation d'un tel moyen de fixation 16 se trouve en figure 5. Il est entendu que les figures 4 et 5 présentent des éléments similaires.

Dans une autre variante de l'invention (non représentée), le faisceau de câbles n'a pas de moyen de fixation direct au plancher, mais il est y fixé par l'intermédiaire du support, préférentiellement au travers de moyen de clippage.

De manière générale, la fixation du faisceau 14 de câbles sur le support 12, à l'aide des moyens de fixation (16 ; 18) du faisceau ou à l'aide de moyen de clippage présent sur le support 12, permet de contribuer à la conception d'un système qui puisse être utilisé avec :
- un maximum de confort puisque le boîtier 10 électronique n'est pas visible par le ou les utilisateurs ;
- un maximum d'efficacité puisque le volume disponible dans l'habitacle ou dans le coffre n'est pas diminué) ; et
- un maximum de sécurité puisque le ou les faisceaux 14 de câbles sont plaqués contre le support 12, permettant de réduire au maximum le volume de la cavité 8, ce qui a pour conséquence de maintenir une épaisseur suffisante de l'élément rigide du dispositif anti sous-marinage 6 pour garantir de bonnes propriétés d'absorption de chocs d'un tel dispositif.

Parmi les moyens de fixation (16 ; 18), au moins un moyen de fixation 18 peut comprendre des moyens de fixation d'un deuxième faisceau de câbles. Cette configuration est avantageuse lorsque le boîtier 10 électronique se trouve fixé sur le support 12 et est alimenté en énergie électrique par un faisceau de câbles. Accessoirement, le deuxième faisceau de câbles peut être une encablure d'autres composants électriques ou électroniques du véhicule.

Un deuxième aspect de l'invention concerne un procédé de montage d'au moins un boîtier 10 électronique dans un véhicule de manière à promouvoir la disponibilité de l'espace ainsi qu'une apparence intérieure confortable dans le cas notamment d'un véhicule haut de gamme où la nécessité d'un boîtier électronique se fait ressentir, ou dans le cas de tout véhicule présentant au moins une série d'options.

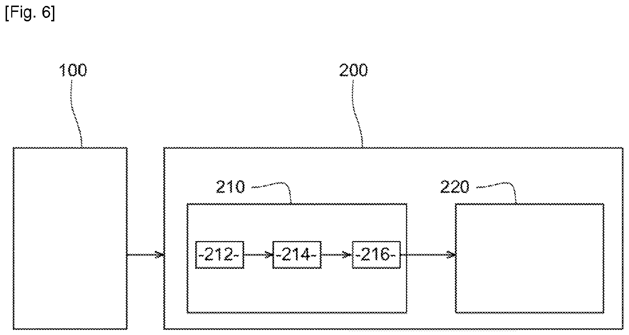

La figure 6 schématise le procédé en deux étapes (100 ; 200) et sa description se fait également en référence aux figures 2 à 5. La première étape 100 est une étape de mise à disposition d'un boîtier électronique dans une cavité 8 montrée par un élément rigide 6 d'un dispositif anti sous-marinage d'un coussin 2 d'assise d'un véhicule automobile, la cavité 8 étant contiguë au plancher 4 du véhicule. La seconde étape 200 du procédé selon l'invention est une étape de fixation du boîtier 10 au plancher 4 par l'intermédiaire d'un support 12 formant une interface de fixation.

L'étape de fixation 200 du boîtier 10 électronique au plancher 4 par l'intermédiaire d'un support 12 formant une interface de fixation peut faire intervenir une sous-étape 210 de fixation du support 12 sur le plancher 4 suivie d'une seconde sous-étape 220 de fixation et/ou d'insertion du boîtier 10 électronique sur le support 12.

Le procédé de montage selon l'invention, et plus particulièrement la première sous-étape 210 de fixation du support 12 sur le plancher 4, peut comprendre la fixation 212 d'au moins deux goujons sur le plancher 4, l'indexage 214 en position du support 12 formant ladite interface de fixation sur les goujons par passage des goujons au travers d'ajours présentés dans le support 12 et la fixation simultanée 216 au plancher 4 du support 12 et d'au moins un faisceau 14 de câbles.

L'invention est avantageuse en ce que seuls deux goujons sont nécessaires pour fixer le support 12 sur le plancher 4. Aussi, l'invention permet de fixer deux éléments différents, à savoir le boîtier électronique et le faisceau de câbles avec seulement deux goujons au lieu des quatre qui auraient été nécessaires sans le support.

La fixation simultanée 216 peut se faire par coopération des moyens de fixation (16 ; 18) du ou des faisceaux 14 de câbles avec lesdits goujons de manière à ce que le support 12 soit en partie intercalé entre le ou les faisceaux 14 de câbles et le plancher 4.

Alternativement à l'étape de fixation simultanée 216, une étape de fixation du ou des faisceaux 14 de câbles en fixant ledit ou lesdits faisceaux 14 de fil au plancher 4 au moyen du support 12 peut être réalisé. Dans ce cas, l'homme du métier prévoira des moyens de clippage sur le support 12.

Il est entendu que toutes les caractéristiques décrites en relation avec les premier et second aspects de l'invention peuvent être combinées entre elles.

## Revendications

1. Véhicule automobile comprenant un plancher (4) et au moins un siège avec un coussin (2) d'assise doté d'un dispositif anti sous-marinage (6) fixé au plancher (4), ledit dispositif anti sous-marinage (6) comprenant un élément rigide montrant un bossage, l'élément rigide présentant une cavité (8) ouverte en direction du plancher (4), le véhicule comprenant en outre au moins un boîtier (10) électronique agencé dans ladite cavité (8) et fixé au plancher (4) par l'intermédiaire d'un support (12) formant une interface de fixation, **caractérisé en ce que** le véhicule comprend au moins un faisceau (14) de câbles agencé pour s'étendre au moins en partie le long de ladite cavité (8) montrée par l'élément rigide, le ou au moins un faisceau (14) de câbles comprenant des moyens de fixation (16 ; 18) au plancher (4), le support (12) formant l'interface de fixation du boîtier électronique étant fixé au plancher (4) par l'intermédiaire des moyens de fixation (16 ; 18) d'au moins un faisceau (4) de câbles de manière à ce que le support (12) soit en partie intercalé entre ledit faisceau (14) de câbles et le plancher (4).

2. Véhicule selon la revendication 1, **caractérisé en ce que** le support (12) formant ladite interface de fixation est indexé en position sur ledit plancher (4) par au moins deux goujons traversant des ajours présentés par ledit support (12), et **en ce que** les moyens de fixation (16 ; 18) du faisceau (14) de câbles coopèrent avec lesdits goujons pour la fixation simultanée du faisceau (14) de câbles et du support (12) sur le plancher (4) ; de préférence, les moyens de fixation (16 ; 18) du faisceau (14) de câbles comprennent au moins un moyen d'agrafage présentant un élément femelle configuré pour coopérer avec un goujon, et/ou lesdits goujons sont fixés sur le plancher (4) par soudage.

3. Véhicule selon l'une des revendications 1 à 2, **caractérisé en ce qu'**au moins un (18) moyen de fixation (16 ; 18) du ou desdits faisceaux (14) de câbles comprend des moyens de fixation (18) d'un deuxième faisceau de câbles ; de préférence, le deuxième faisceau de câbles est un faisceau de câbles destiné à l'alimentation en énergie électrique du boîtier (10) électronique.

4. Véhicule selon l'une des revendications 1 à 3, **caractérisé en ce que** le support (12) formant ladite interface de fixation présente des moyens de clippage pour la fixation dudit boîtier (10) électronique ; de préférence le support (12) est réalisé en un matériau plastique et les moyens de clippage sont venus de matière avec ledit support (12).

5. Véhicule selon l'une des revendications 1 à 4, **caractérisé en ce que** le support (12) formant ladite interface de fixation est une platine de fixation et/ou **en ce que** le support (12) présente un détrompeur coopérant avec des moyens complémentaires présentés par le boîtier (10) électronique de manière à garantir le bon positionnement dudit boîtier sur ledit support ; de préférence le support (12) est réalisé en un matériau plastique et le détrompeur est un ergot venu de matière avec ledit support (12).

6. Procédé de montage d'au moins un boîtier (10) électronique dans un véhicule automobile, le véhicule comprenant un plancher (4), ledit boîtier (10) électronique étant disposé (100) dans une cavité (8) ouverte en direction du plancher (4) montrée par un élément rigide d'un dispositif anti sous-marinage (6) d'un coussin (2) d'assise d'un siège du véhicule, l'élément rigide montrant un bossage, le procédé comprenant une étape de fixation (200) dudit boîtier (10) électronique audit plancher (4) par l'intermédiaire d'un support (12) formant une interface de fixation, de sorte que l'étape de fixation du boîtier (10) électronique au plancher (4) comprend une sous-étape de fixation (210) du support (12) sur le plancher (4) suivie d'une sous-étape de fixation (220) dudit boîtier (10) électronique sur ledit support (12), le procédé est **caractérisé en ce que** la sous-étape de fixation (210) du support (12) sur le plancher (4) comprend :
- la fixation (212) d'au moins deux goujons sur le plancher (4) ;
- l'indexage (214) en position du support (12) formant ladite interface de fixation sur lesdits goujons par le passage desdits goujons au travers d'ajours présentés par ledit support (12); et
- la fixation simultanée (216) au plancher (4) du support (12) formant l'interface de fixation et d'au moins un faisceau (14) de câbles par coopération des moyens de fixation (16 ; 18) du ou des faisceaux (14) de câbles avec lesdits goujons de manière à ce que ledit support (12) soit en partie intercalé entre le ou lesdits faisceaux (14) de câbles et le plancher (4).

## Patentansprüche

1. Kraftfahrzeug mit einem Fußboden (4) und mindestens einem Sitz mit einem Sitzkissen (2), das mit einer am Fußboden (4) befestigten Unterhaubenschutzvorrichtung (6) versehen ist, wobei die Unterhaubenschutzvorrichtung (6) ein steifes Element aufweist, das einen Vorsprung aufweist, wobei das steife Element einen Hohlraum (8) aufweist, der in Richtung des Fußbodens (4) offen ist, wobei das Fahrzeug ferner mindestens ein Gehäuse (10) aufweist Elektronik, die in dem Hohlraum (8) angeordnet ist und an dem Boden (4) über einen Träger (12) befestigt ist, der eine Befestigungsschnittstelle bildet, **dadurch gekennzeichnet, dass** das Fahrzeug mindestens einen Kabelstrang (14) aufweist, der so angeordnet ist, dass er sich zumindest teilweise entlang des Hohlraums (8) erstreckt, der durch das starre Element dargestellt wird, wobei der oder zumindest ein Kabelstrang (14) Befestigungsmittel (16 aufweist; 18) am Boden (4), wobei der die Befestigungsschnittstelle des Elektronikgehäuses bildende Träger (12) über die Befestigungsmittel (16 am Boden (4) befestigt ist; 18) mindestens eines Kabelbündels (4) derart, dass der Träger (12) teilweise zwischen dem Kabelbündel (14) und dem Boden (4) angeordnet ist.

2. Fahrzeug nach Anspruch 1, **dadurch gekennzeichnet, dass** der Träger (12), der die Befestigungsschnittstelle bildet, an dem Boden (4) durch mindestens zwei Bolzen, die durch von dem Träger (12) dargestellte Durchbrüche hindurchgehen, in Position indexiert ist, und dass die Befestigungsmittel (16; 18) Das Kabelbündel (14) arbeitet mit den Stiften zusammen, um den Kabelbaum (14) und den Träger (12) gleichzeitig am Boden (4) zu befestigen. vorzugsweise die Befestigungsmittel (16; 18) des Kabelbündels (14) umfasst mindestens ein Heftmittel, das ein aufnehmendes Element aufweist, das so konfiguriert ist, dass es mit einem Bolzen zusammenwirkt, und/oder die Bolzen durch Schweißen an dem Boden (4) befestigt sind.

3. Fahrzeug nach einem der Ansprüche 1 bis 2, **dadurch gekennzeichnet, dass** mindestens ein Befestigungsmittel (18) (16; 18) des oder der Kabelbündel (14) Befestigungsmittel (18) für einen zweiten Kabelbaum aufweist; Vorzugsweise ist der zweite Kabelbaum ein Kabelbaum zur Stromversorgung des Elektronikgehäuses (10).

4. Fahrzeug nach einem der Ansprüche 1 bis 3, **dadurch gekennzeichnet, dass** der Träger (12), der die Befestigungsschnittstelle bildet, Clipmittel zur Befestigung des elektronischen Gehäuses (10) aufweist; Vorzugsweise ist der Träger (12) aus einem Kunststoffmaterial hergestellt und die Clipmittel sind mit dem Träger (12) aus Material hergestellt.

5. Fahrzeug nach einem der Ansprüche 1 bis 4, **dadurch gekennzeichnet, dass** der Träger (12), der die Befestigungsschnittstelle bildet, eine Befestigungsplatte ist und/oder dass der Träger (12) eine Irreführung aufweist, die mit komplementären Mitteln zusammenwirkt, die von dem elektronischen Gehäuse (10) bereitgestellt werden, um eine gute Positionierung des Gehäuses auf dem Träger zu gewährleisten; Vorzugsweise ist der Träger (12) aus einem Kunststoffmaterial hergestellt, und der Enttrometer ist ein Zapfen aus Material mit dem Träger (12).

6. Verfahren zum Montieren mindestens eines elektronischen Gehäuses (10) in einem Kraftfahrzeug, wobei das Fahrzeug einen Boden (4) umfasst, wobei das elektronische Gehäuse (10) in einem Hohlraum (8) angeordnet ist, der in Richtung auf den Boden (4) offen ist, der durch ein starres Element einer Anti-Unterwasser-Vorrichtung (6) eines Sitzpolsters (2) eines Fahrzeugsitzes dargestellt wird das starre Element einen Vorsprung zeigt, wobei das Verfahren einen Schritt des Befestigens (200) des elektronischen Gehäuses (10) an dem Boden (4) durch einen Träger (12) umfasst, der eine Befestigungsschnittstelle bildet, sodass der Schritt des Befestigens des elektronischen Gehäuses (10) an dem Boden (4) einen Unterschritt des Befestigens (210) des Trägers an dem Trägers (12) umfasst Fußboden (4) mit anschließendem Unterschritt des Befestigens (220) des elektronischen Gehäuses (10) an dem Träger (12), **dadurch gekennzeichnet, dass** der Unterschritt des Befestigens (210) des Trägers (12) an dem Fußboden (4) umfasst:
- Befestigung (212) von mindestens zwei Bolzen auf dem Boden (4);
- die Indexierung (214) in der Position des Trägers (12), der die Befestigungsschnittstelle auf den Bolzen bildet, durch den Durchgang der Bolzen durch Durchbrüche, die von dem Träger (12) dargestellt werden; und
- gleichzeitige Befestigung (216) am Boden (4) des die Befestigungsschnittstelle bildenden Trägers (12) und mindestens eines Kabelbündels (14) durch Zusammenwirken der Befestigungsmittel (16); 18) des oder der Kabelbündel (14) mit den Bolzen, sodass der Träger (12) teilweise zwischen dem oder den Kabelbündeln (14) und dem Boden (4) angeordnet ist.

## Claims

1. Automotive vehicle comprising a floor (4) and at least one seat with a seat cushion (2) fitted with an anti-underwater device (6) attached to the floor (4), the said anti-underwater device (6) comprising a rigid component showing a boss, the rigid component having a cavity (8) opened towards the floor (4), the vehicle also having at least one enclosure (4) 10) electronic arranged in the cavity (8) and fixed to the floor (4) through a support (12) forming a fastening interface, **characterized in that** the vehicle includes at least one beam (14) of cables arranged to extend at least in part along the cavity (8) shown by the rigid element, or at least one beam (14) of cables containing means of attachment (16; 18) at the floor (4), the support (12) forming the electronic enclosure attachment interface being attached to the floor (4) through the means of attachment (16; 18) of at least one (4) cable bundle so that the support (12) is partially interspersed between the cable bundle (14) and the floor (4).

2. Vehicle according to Claim 1, characterized as the support (12) forming the said fixing interface is indexed in position on the said floor (4) by at least two pins crossing days presented by the said support (12), and as the means of attachment (16); 18) of the harness (14) of cables cooperate with the said pins for the simultaneous attachment of the harness (14) of cables and the support (12) on the floor (4); preferably means of attachment (16; 18) of the beam (14) of cables include at least one stapling means having a female element configured to cooperate with a pin, and/or the studs are fixed to the floor (4) by welding.

3. Vehicle according to one of the claims 1 to 2, **characterized by** at least one (18) means of fixation (16; 18) of the said bundle(s) (14) of cables includes means of securing (18) a second bundle of cables; preferably, the second cable bundle is a bundle of cables for the electrical power supply of the electronic housing (10).

4. A vehicle in accordance with one of Claims 1 to 3, **characterized by** the fact that the support (12) forming the said fixing interface presents means of splitting for the attachment of the said electronic enclosure (10); preferably the support (12) is made of a plastic material and the means of clippage came from material with that support (12).

5. Vehicle according to one of Claims 1 to 4, characterized as the support (12) forming the said mounting interface is a mounting plate and/or the support (12) presents a detrometer cooperating with additional means presented by the electronic enclosure (10) in such a way as to ensure the proper positioning of the said enclosure on the support; preferably the support (12) is made of a plastic material and the decoder is a ergot of material with the said support (12).

6. Installation process of at least one electronic housing (10) in a motor vehicle, the vehicle having a floor (4), the said electronic housing (10) being placed (100) in a cavity (8) open towards the floor (4) shown by a rigid element of an anti-submarine device (6) of a cushion (2) of a seat of the motor vehicle vehicle, the rigid element showing a bossing, the process including a fastening step (200) of the said enclosure (10) electronic said floor (4) through a support (12) forming a fastening interface, so that the fastening step of the enclosure (10) electronic to the floor (4) includes a fastening sub-step (210) of the support (12) on the floor (4) followed by a substage of attachment (220) of the said electronic enclosure (10) on the said support (12), the process is **characterized in that** the substage of attachment (210) of the support (12) on the floor (4) includes:
- fixing (212) at least two pins on the floor (4);
- indexing (214) in the position of the support (12) forming the said interface of attachment on the said pins by the passage of the said pins through days presented by the said support (12); and
- simultaneous attachment (216) to the floor (4) of the support (12) forming the attachment interface and of at least one bundle (14) of cables by means of attachment (16); 18) of the beam(s) (14) of cables with the said pins so that the said carrier(s) (12) is partially interspersed between the said cable bundle(s) (14) and the floor(s) (4).
